Europäisches Patentamt

European Patent Office

Office européen des brevets

(11) Veröffentlichungsnummer: 0 401 558
A2

(12) EUROPÄISCHE PATENTANMELDUNG

(21) Anmeldenummer: 90109143.9

(22) Anmeldetag: 15.05.90

(51) Int. Cl.⁵: H04B 10/14

(30) Priorität: 06.06.89 DE 3918474

(43) Veröffentlichungstag der Anmeldung:
12.12.90 Patentblatt 90/50

(84) Benannte Vertragsstaaten:
DE FR GB NL

(71) Anmelder: Siemens Aktiengesellschaft
Wittelsbacherplatz 2
D-8000 München 2(DE)

(72) Erfinder: Meissner, Eckhard, Dipl.-Ing.
Böglstrasse 2/2
D-8000 München 83(DE)
Erfinder: Auracher, Franz, Dr.
Eichenstrasse 26
D-8021 Baierbrunn(DE)

(54) Verfahren zur Realisierung eines phasen- oder/und polarisationsunempfindlichen optischen Überlagerungsempfang für ein DPSK- oder ASK-moduliertes Sendesignal.

(57)
2.1 Es wird für DPSK- oder ASK-modulierte Sendesignale bei Verwendung einer gegenüber einer Datenrate dieser Signale sehr kleinen Zwischenfrequenz ein einfaches Verfahren zur Realisierung eines phasen- oder/und polarisationsunempfindlichen optischen Überlagerungsempfangs für ein solches Signal angegeben.
2.2 Dazu wird bei jedem Takt des Sendesignals (S) die Phase dieses Signals (S) am Anfang (A1) und in der Mitte (M) der Taktzeit (T) dieses Taktes zwischen 0° oder 90° oder/und die Polarisation dieses Signals (S) zumindest am Anfang (A2) des zweiten und am Anfang (A4) des vierten Viertels dieser Taktzeit (T) umgetastet. Das auf diese Weise umgetastete Sendesignal (S) wird von einem einfachen optischen Überlagerungsempfänger (ÜE) empfangen, der die Besonderheit aufweist, daß ein Zwischenfrequenzfilter (ZFF) ein Integrator ist, der über jeweils ein Viertel der Taktzeit (T) integriert. Das Verfahren kann auch in zwei verschiedenen Verfahrensvarianten durchgeführt werden.
2.3 Optischer Überlagerungsempfang

## FIG 1

## Verfahren zur Realisierung eines phasen- oder polarisationsunempfindlichen optischen Überlagerungsempfangs für ein DPSK-oder ASK-moduliertes Sendesignal

Die Erfindung betrifft ein Verfahren zur Realisierung eines optischen Überlagerungsempfangs für ein DPSK- oder ASK-moduliertes Sendesignal nach dem Oberbegriff des Patentanspruchs 1.

Beim optischen Überlagerungsempfang, bei dem ein zugeführtes optisches Sendesignal mit einem optischen Lokaloszillatorsignal überlagert und aus den überlagerten optischen Signalen über eine Zwischenfrequenzfilterung das Ausgangssignal des Empfängers abgeleitet wird, hängt die Empfängerempfindlichkeit im allgemeinen von einer Differenz zwischen Polarisationszuständen und Phasen des Sendesignals und des Lokaloszillatorsignals ab. Stimmen die Polarisationszustände von Sende- und Lokaloszillatorsignal nicht überein, treten Empfindlichkeitsverluste beim Empfang auf. Bei Verwendung einer niedrigen Zwischenfrequenz, die gegenüber der vom Sendesignal übertragenen Datenrate um ein oder mehrere Größenordnungen kleiner ist, wechseln außerdem die einander überlagerten optischen Signale periodisch zwischen einer Kophasal- und einer Quadraturkomponente.

Für einen polarisationsunempfindlichen Empfang können bekannte Polarisations-Quadratur-Empfänger (polarisation diversity receiver) verwendet werden, bei denen das Sendesignal in zwei zueinander orthogonale Polarisationszustände aufgeteilt und diese getrennt empfangen und elektrisch addiert werden.

Für einen phasenunempfindlichen Empfang können bekannte Phasen-Quadratur-Empfänger (phase diversity receiver) verwendet werden, bei denen die Kophasal- und Quadraturkomponenten getrennt empfangen und elektrisch addiert werden.

Diese bekannten Empfänger benötigen ein 90°-Hybrid, das bei optischen Systemen nur schwer realisierbar ist, und überdies sind zwei oder vier optische Überlagerungsempfänger erforderlich.

Phasen- oder/und polarisationsunempfindlicher Empfang könnte auch durch eine Phasen- oder/und Polarisationsregelung erreicht werden, doch sind solche Regelungen sehr aufwendig.

Aufgabe der Erfindung ist es, für DPSK- oder ASK-modulierte Sendesignale bei Verwendung einer gegenüber einer DAtenrate dieser Signale sehr kleinen Zwischenfrequenz ein einfaches Verfahren zur Realiesierung eines phasen- oder/und polarisationsunempfindlichen optischen Überlagerungsempfang für ein solches Signal anzugeben.

Diese Aufgabe wird mit einem Verfahren nach dem Oberbegriff des Patentanspruchs 1 gelöst, das die im kennzeichnenden Teil des Patentanspruchs 1, des Patentanspruchs 2 oder des Patentanspruchs 3 angegebenen Merkmale aufweist und auf einer datensynchronen Phasenumtastung oder sinusförmigen Phasenmodulation (letztere bekannt aus Proceedings of the ECOC 1988, Part II, S. 65-68) oder/und einer datensynchronen Polarisationsumtastung des Sendesignals beruht.

Bei einem Verfahren nach Anspruch 1 oder 2 werden unabhängig voneinander phasenunempfindlicher Empfang durch die Phasenumtastung und polarisationsunempfindlicher Empfang durch die Polarisationsumtastung erreicht. Wird beides zugleich vorgenommen, wird phasen- und polarisationsunempfindlicher Empfang erhalten.

Bevorzugte Ausgestaltungen eines Verfahren nach Anspruch 1 oder 2 gehen aus den Ansprüchen 4 und 5 hervor.

Das Verfahren nach Anspruch 3 bewirkt phasenunempfindlichen Empfang. Durch die in Anspruch 6 angegebene Weiterbildung dieses Verfahrens nach Anspruch 3 kann zudem auch polarisationsunempfindlicher Empfang erreicht werden.

Das Verfahren nach Anspruch 6 kann auch nach Maßgabe des Anspruchs 7 ausgeführt werden.

Daß bei den erfindungsgemäßen Verfahren der Empfang phasen-oder/und polarisationsunempfindlich ist, d.h., daß das Ausgangssiganl des Empfängers phasen- oder/und polarisationsunabhängig ist, kann mathematisch gezeigt werden.

Eine besonders vorteilhafte Vorrichtung zur Durchführung eines erfindungsgemäßen Verfahrens ist im Anspruch 8 angegeben, woraus auch ein großer Vorteil der Erfindung erkennbar ist, nach welchem zur Durchführung des Verfahrens nur ein einfacher, herkömmlicher optischer Überlagerungsempfänger erforderlich ist, der lediglich die Besonderheit aufweisen, daß das Zwischenfrequenzfilter ein spezieller Integrator ist, der über ein Viertel der Taktzeit integriert.

Die Erfindung wird anhand der Figuren in der nachfolgenden Beschreibung beispielhaft näher erläutert. Es zeigen:

Figur 1 eine schematische Darstellung einer Vorrichtung zur Durchführung eines erfindungsgemäßen Verfahrens mit einem optischen Überlagerungsempfänger und einem vorgeschalteten Phasen- und Polarisationsumtastteil,

Figur 2 Taktfolgen über der Zeit t, die den das Sendesignal taktenden Takt und dazu synchronisierte Takte zur Steuerung des Umtastteiles repräsentieren,

Figur 3 ein anderes Phasen- und Polarisationsumtastteil, das anstelle des Umtastteils nach Figur 1 verwendbar ist,

Figur 4 Taktfolgen über der Zeit t, die ähnlich wie in Figur 2 den das Sendesignal taktenden Takt und dazu synchronisierte Takte zur Steuerung des Umtastteils nach Figur 3 repräsentieren,

Figur 5 ein weiteres Phasen- und Polarisationsumtastteil, das anstelle der Umtastteile nach Figur 1 und Figur 2 verwendbar ist,

Figur 6 in einem Zeitdiagramm ähnlich denen nach Figur 2 und Figur 4 den das Sendesignal taktenden Takt und ein dazu synchronisiertes sinusförmiges Modulationssignal sowie einen dazu synchronisierten Takt zur Steuerung des Umtastteils nach Figur 5 repräsentieren,

Figur 7 ein Beispiel, bei dem ein Polarisationsumschalter des Umtastteils zwischen dem Lokaloszillator und der optischen Einrichtung zum Überlagern des Sendesignals und Lokaloszillatorsignals angeordnet ist,

Figur 8 ein Beispiel, bei dem sowohl ein Phasenumschalter als auch ein Polarisationsumschalter zwischen der genannten optischen Einrichtung und dem Lokaloszillator angeordnet ist, und

Figur 9 ein Beispiel, bei dem ein Phasenumschalter zwischen der genannte optischen Einrichtung und dem Lokaloszillator und ein Polarisationsumschalter senderseitig angeordnet ist.

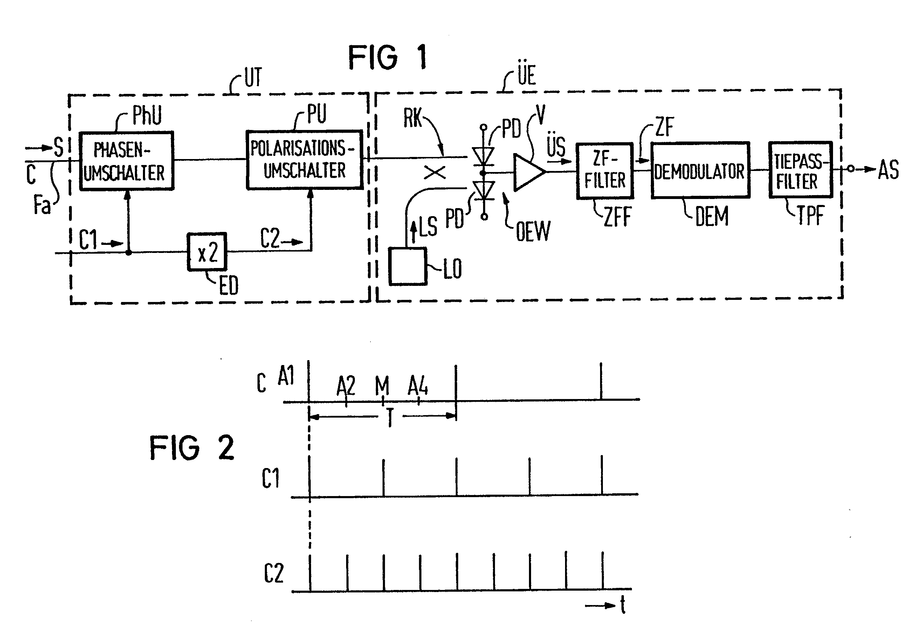

Die Vorrichtung nach Figur 1 besteht im wesentlichen aus dem optischen Überlagerungsempfänger ÜE und dem vorgeschalteten Umtastteil UT, das beispielsweise einen Phasenumschalter PhU und einen Polarisationsumschalter PU aufweist. Bei dieser Vorrichtung wird das beispielsweise durch eine Lichtleitfaser Fa geführte, z.B. linear polarisierte und mit der Taktfolge C nach Figur 1 getaktete Sendesignal S dem Phasenumschalter PhU zugeleitet, in welchem die Phase dieses Signals S mit dem zur Taktfolge C synchronisierten und die doppelte Taktfrequenz wie diese aufweisenden Taktfolge C1 nach Figur 2 jeweils am Anfang A1 und in der Mitte M der Taktzeit T jedes Taktes der Taktfolge C zwischen $0°$ und $90°$ umgetastet. Das auf diese Weise phasenumgetastete Sendesignal S wird dem Polarisationsumschalter PU zugeführt, in welchem die Polarisation dieses Signals S mit der zur Taktfolge C synchronisierten und die doppelte Taktfrequenz wie die Taktfolge C1 aufweisenden Taktfolge C2 nach Figur 2 jeweils am Anfang A1, A2, M und A4 jedes Viertels der Taktzeit T der Taktfolge C zwischen zwei Polarisationszuständen umgeschaltet, die senkrecht zueinander linear polarisiert sind.

Die Taktfolgen C1 und C2 können beispielsweise durch Frequenzverdoppelung in einem Frequenzverdoppler FD aus der Taktfolge C bzw. C1 abgeleitet werden. Auch können umgekehrt wie beim Beispiel nach Figur 1 der Phasenumschalter mit dem Takt C2 und der Polarisationsumschalter mit dem Takt C1 getaktet werden.

Das in der angegebenen Weise phasen- und polarisationsumgetastete Sendesignal S wird einem optischen Richtkoppler RK des optischen Überlagerungsempfängers ÜE zugeleitet, in welchem dieses Signal S mit einem von einem Lokaloszillator LO dieses Empfängers ÜE abgegebenen, z.B. linear polarisierten optischen Lokaloszillatorsignal LS überlagert wird.

Aus den einander überlagerten optischen Signalen S und LS wird nach einer an sich bekannten optoelektrischen Wandlung in einem beispielsweise einen oder zwei Photodetektoren PD und einen nachgeschalteten elektrischen Verstärker V enthaltenden optoelektrischen Wandlung OEW ein elektrisches Überlagerungssignal ÜS erzeugt, das ein Zwischenfrequenzsignal ZF mit einer im Vergleich zur Taktfrequenz der das Sendesignal S taktenden Taktfolge C sehr kleinen Zwischenfrequenz enthält.

Das Zwischenfrequenzsignal ZF wird aus dem Überlagerungssignal ÜS in einem Zwischenfrequenzfilter ZFF in Form eines Integrators ausgefiltert, der das zugeführte Überlagerungssignal ÜS aufeinanderfolgend über jeweils ein Viertel der Taktzeit T, d.h. jeweils über die von A1 bis A2, von A2 bis M, von M bis A4 und von A4 bis zum Anfang A1 der nächstfolgenden Taktzeit T usw. der Taktfolge C dauernden Zeitviertel in Figur 2 integriert. Das die Summe dieser Integrale enthaltende Zwischen frequenzsignal ZF wird in einem Demodulator DEM demoduliert, der bei bei ASK-demodulierten Sendesignalen S ein ASK-Demodulator und bei DPSK-modulierten Sendesignalen S ein DPSK-Demodulator ist.

Das demodulierte Signal wird einem Tiefpaßfilter TPF zugeführt, das jeweils über eine Taktzeit T mittelt.

Das datentragende Ausgangssignal AS des Tiefpaßfilters TPF ist, wie mathematisch gezeigt werden kann, sowohl unabhängig von der Phase als auch der Polarisation des empfangenen Sendesignals S, die jeweils schwanken können.

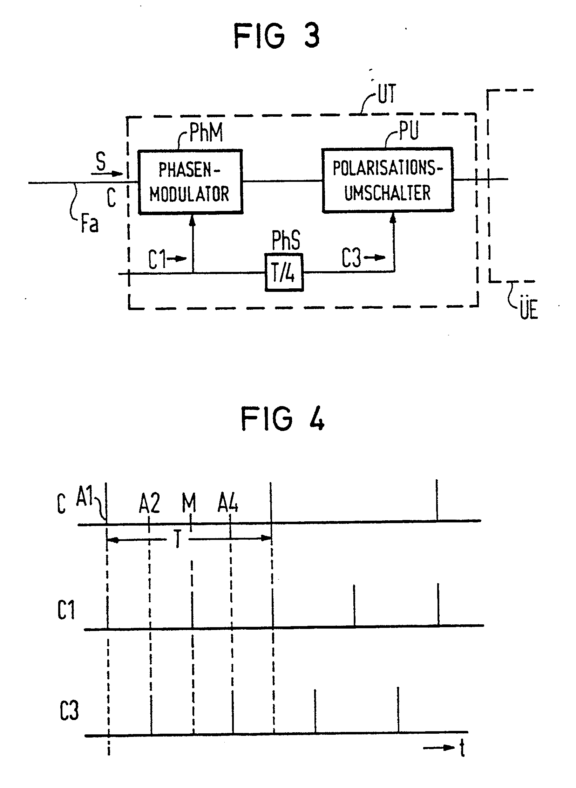

Beim vorstehend beschriebenen Beispiel wurde die Polarisationsumtastung bzw. Phasenumtastung am Anfang jedes Viertels der Taktzeit T vorgenommen. Dies ist nicht erforderlich. Es genügt, wenn diese Umtastung nur am Anfang A2 des zweiten und am Anfang A4 des vierten Viertels jeder Taktzeit T der Taktfolge C vorgenommen wird. Anstelle der Taktfolge C2 nach Figur 2 kann in diesem Fall die Taktfolge C3 nach Figur 4 verwendet werden, die der Taktfolge C1 entspricht, gegenüber dieser aber um ein Viertel der Taktzeit T phasenverschoben ist. Diese Taktfolge C3 kann aus der Taktfolge C1 durch einen Phasenschieber PhS nach Figur 3 gewonnen werden, der die Phase der Taktfolge C1 um T/4 verschiebt. Auch in diesem Fall kann umgekehrt die Taktfolge C1 zur Polarisationsumtastung und die Taktfolge C3 zur Phasenumtastung verwendet werden.

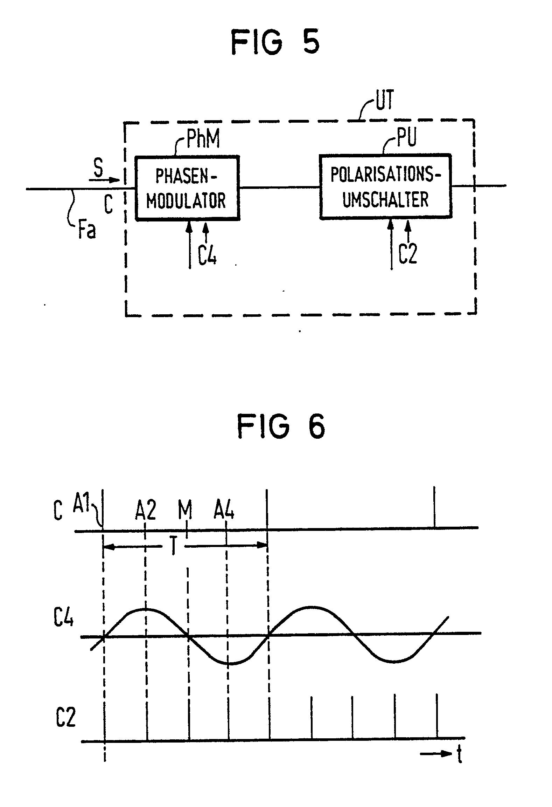

Phasenunempfindlichkeit des Ausgangssignals AS kann auch durch eine sinusförmige Modulation der Phase des dem Umtastteil UT zugeführten Sendesignals S erreicht werden. Anstelle des Phasenumschalters PhU ist dann ein Phasenmodulator PhM nach Figur 5 zu verwenden, der mit einem sinusförmigen Steuersignal C4 nach Figur 6 gesteuert wird. Dieses Steuersignal C4 und/oder der Phasenmodulator PhM sind so dimensioniert, daß die Amplitude der sinusförmigen Modulation der Phase des Sendesignals S bei 70,2° und ihre Nulldurchgänge am Anfang A1 und in der Mitte M jeder Taktzeit T liegen. Eine Polarisations unabhängigkeit des Ausgangssignals AS kann in diesem Fall durch eine zusätzliche Polarisationsumtastung entsprechend der Taktfolge C2 nach Figur 2 oder der Taktfolge C3 nach Figur 4 erhalten werden.

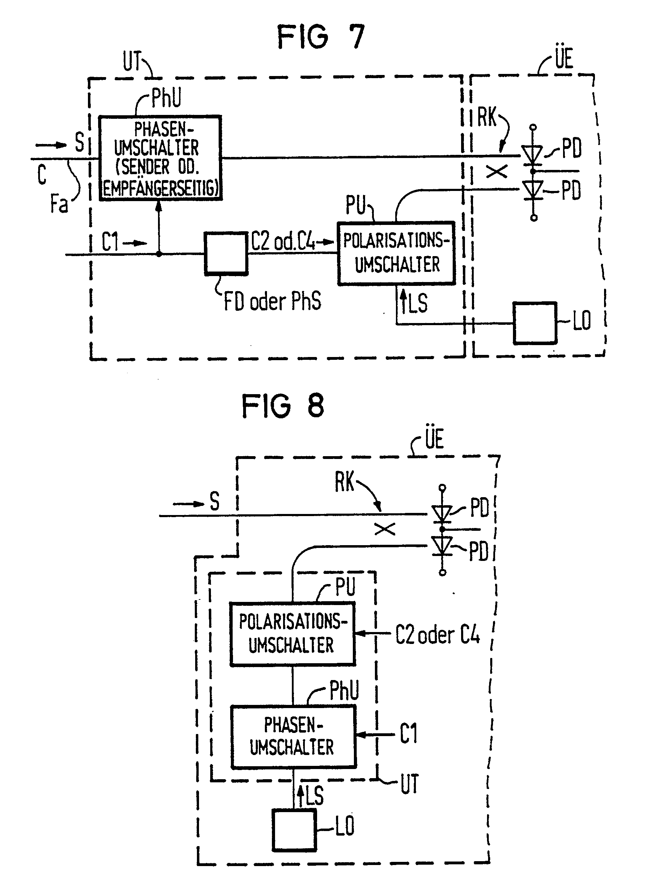

Bei den vorstehend beschriebenen Beispielen und beim nachstehenden Beispiel auch Figur 8 wird zuerst die Phase und dann die Polarisation des Sendesignals S bzw. Lokaloszillatorsignals LS umgetastet. Es kann auch umgekehrt zuerst die Polarisation und dann die Phase des Sendesignals bzw. Lokaloszillatorsignals LS umgetastet werden.

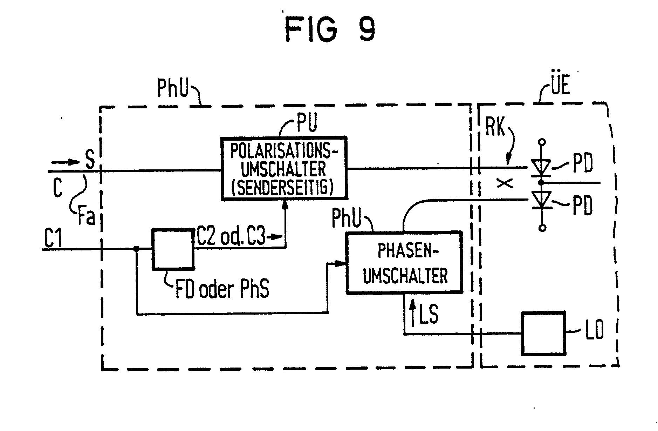

Die Phasenumtastung oder auch die Phasenmodulation können senderseitig oder auch empfängerseitig, z.B. unmittelbar vor dem Empfänger oder nach dem Lokaloszillator durchgeführt werden. Die Polarisationsumtastung kann senderseitig oder empfängerseitig nach dem Lokaloszillator durchgeführt werden. Das Beispiel nach Figur 7 zeigt einen Fall, bei dem der Polarisationsumschalter PU des Umtastteils UT den Polarisationszustnad des Lokaloszillatorsignals LS anstelle des Sendesignals S umtastet. Der Phasenumschalter PhU tastet dagegen sender- oder empfängerseitig die Phase des Sendesignals S um bzw. moduliert es sinusförmig. Beim Beispiel nach Figur 8 wird nur das Lokaloszillatorsignal LS und nicht das Sendesignal S in der Polarisation und in der Phase umgetastet. Beim Beispiel nach Figur 9 wird dagegen die Phase des Lokaloszillatorsignals LS umgetastet, während die Polarisation des Sendesignals S senderseitig umgetastet wird. Bei den Beispielen nach den Figuren 7 bis 9 kann der Phasenumschalter PhU durch einen sinusförmig steuerbaren Phasenmodulator PhM ersetzt werden, der dann mit dem sinusförmigen Steuersignal C4 nach Figur 6 anzusteuern ist. Beim Beispiel nach Figur 8 kann auch der Phasenumschalter PhU mit der Taktfolge C2 oder C4 und der Polarisationsumschalter PU mit der Taktfolge C1 getaktet werden.

**Ansprüche**

1. Verfahren zur Realisierung eines phasen- oder/und polarisationsunempfindlichen optischen Überlagerungsempfangs für ein DPSK- oder ASK-moduliertes optische Sendesignal (S), wobei durch Überlagern des Sendesignals (S) mit einem optischen Lokaloszillatorsignal (LS) und durch optoelektrische Wandlung ein elektrisches Überlagerungssignal (ÜS) erzeugt und aus diesem Überlagerungssignal (ÜS) durch Filterung ein Zwischenfrequenzsignal (ZF) gewonnen wird, das DPSK- bzw. ASK-demoduliert und tiefpaßgefiltert wird, **dadurch gekennzeichnet,** daß bei jedem Takt des Sendesignals (S) die Phase dieses Signals (S) oder des Lokaloszillatorsignals (LS) am Anfang (A1) und in der Mitte (M) der Taktzeit (T) dieses Taktes zwischen 0° und 90° oder/und daß bei jedem Takt des Sendesignals (S) die Polarisation dieses Signals (S) oder des Lokaloszillatorsignals (LS) zumindest am Anfang (A2) des zweiten und am Anfang (A4) des vierten Viertels dieser Taktzeit (T) zwischen zwei zueinander orthogonalen Polarisationszuständen umgetastet wird, und daß das Zwischenfrequenzsignal (ZF) durch aufeinanderfolgende Integrationen des Überlagerungssignals (ÜS) über jeweils ein Viertel der Taktzeit (T) gewonnen wird.

2. Verfahren zur Realisierung eines phasen- oder/und polarisationsunempfindlichen optischen Überlagerungsempfangs für ein DPSK- oder ASK-moduliertes optisches Sendesignal (S), wobei durch Überlagern des Sendesignals (S) mit einem optischen Lokaloszillatorsignal (LS) und durch optoelektrische Wandlung ein elektrisches Überlagerungssignal (ÜS) erzeugt und aus diesem Überlagerungssignal (ÜS) durch Filterung ein Zwischenfrequenzsignal (ZF) gewonnen wird, das DPSK- bzw. ASK-demoduliert und tiefpaßgefiltert wird, **dadurch gekennzeichnet,** daß bei jedem Takt des Sendesignals (S) die Phase dieses Signals (S) oder des Lokaloszillatorsignals (LS) zumindest am Anfang (A2) des zweiten und am Anfang (A4) des vierten Viertels der Taktzeit (T) dieses Taktes zwischen 0° und 90° umgetastet wird, oder/und daß bei jedem Takt des Sendesignals (S) die Polarisation dieses Signals (S) oder des Lokaloszillatorsignals am Anfang (A1) und in der Mitte (M) dieser Taktzeit (T) zwischen zwei zueinander orthogonalen Polarisationszuständen umgetastet wird, und daß das Zwischenfrequenzsignal (ZF) durch aufeinanderfolgende Integrationen des Überlagerungssignals (ÜS) über jeweils ein Viertel der Taktzeit (T) gewonnen wird.

3. Verfahren zur Realisierung eines phasenunempfindlichen optischen Überlagerungsempfangs für ein DPSK- oder ASK-moduliertes optisches Sendesignal (S), wobei durch Überlagerung des Sendesignals (S) mit einem optischen Lokaloszillatorsignal (LS) und durch optoelektrische Wandlung ein elektrisches Überlagerungssignal (ÜS) erzeugt und aus diesem Überlagerungssignal (ÜS) durch Filterung ein Zwischenfrequenzsignal (ZF) gewonnen wird, das DPSK- bzw. ASK-demoduliert und tiefpaßgefiltert wird, **dadurch gekennzeichnet,** daß bei jedem Takt des Sendesignals (S) die Phase dieses Signals (S) oder des Lokaloszillatorsignals (LS) derart mit einer Amplitude von 70,2° sinusförmig moduliert wird, daß die Nulldurchgänge des Sinus am Anfang (A1) und in der Mitte (M) der Taktzeit (T) dieses Taktes liegen, und daß das Zwischenfrequenzsignal (ZF) durch aufeinanderfolgende Integrationen des Überlagerungssignals (ÜS) über jeweils ein Viertel der Taktzeit (T) gewonnen wird.

4. Verfahren nach Anspruch 1, **dadurch gekennzeichnet,** daß die Polarisation des Sendesignals (S) oder des Lokaloszillatorsignals (LS) am Anfang (A1, A2, M, A4) jedes Viertels der Taktzeit (T) zwischen zwei zueinander orthogonalen Polarisationszuständen umgetastet wird.

5. Verfahren nach Anspruch 2, **dadurch gekennzeichnet,** daß die Phase des Sendesignals (S) oder des Lokaloszillatorsignals (LS) am Anfang (A1, A2, M, A4) jedes Viertels der Taktzeit (T) zwischen 0° und 90° umgetastet wird.

6. Verfahren nach Anspruch 3 zur Realisierung eines phasen-und polarisationsunempfindlichen optischen Überlagerungsempfang für ein DPSK- oder ASK-moduliertes Sendesignal (S), **dadurch gekenneichnet,** daß die Polarisation des Sendesignals (S) oder des Lokaloszillatorsignals (LS) zumindest am Anfang (A2) des zweiten und am Anfang (A4) des vierten Viertels dieser Taktzeit (T) zwischen zwei zueinander orthogonalen Polarisationszuständen umgetastet wird.

7. Verfahren nach Anspruch 6, **dadurch gekennzeichnet,** daß die Polarisation des Sendesignals (S) oder des Lokaloszillatorsignasl (LS) am Anfang (A1, A2, M, A4) jedes Viertels der Taktzeit (T) zwischen zwei zueinander orthogonalen Polarisationszuständen umgetastet wird.

8. Vorrichtung zur Durchführung eines Verfahrens nach einem der vorhergehenden Ansprüche, **gekennzeichnet durch**
- einen taktbaren Phasenumschalter (PhU) oder sinusförmig steuerbaren Phasenmodulator (PhM) zum Umtasten oder sinusförmigen Modulieren der Phase des Sendesignals (S) oder des Lokaloszillatorsisgnals (LS), oder/und
- einen taktbaren Polarisationsumschalter (PU) zum Umtasten der Polarisation des Sendesignals (S) oder des Lokaloszillatorsignals (LS), und
- einen optischen Überlagerungsempfänger (ÜE) mit einer optischen Einrichtung (RK) zum Überlagern des optischen Sendesignals (S) und Lokaloszillatorsignals (LS), einer optoelektrischen Wandlereinrichtung (OEW) zur Umwandlung der beiden überlagerten optischen Signale (S, LS) in das elektrische Überlagerungssignal (ÜS), einem Zwischenfrequenzfilter (ZF) zum Filtern des Überlagerungssignals (ÜS) und Erzeugen des Zwischenfrequenzsignals (ZF), einem DPSK- oder ASK-Demodulator (DEM) zum Demodulieren des Zwischenfrequenzsignals (ZF), und einem Tiefpaßfilter (TPF) zum Filtern des demodulierten Signals, wobei das Zwischenfrequenzfilter (ZFF) aus einem Integrator besteht, der über ein Viertel der Taktzeit (T) integriert.

# FIG 1

# FIG 2

EP 0 401 558 A2

# FIG 3

# FIG 4

# FIG 5

# FIG 6

# FIG 7

# FIG 8

# FIG 9